# EUROPÄISCHE PATENTSCHRIFT

(11) **EP 1 652 705 B1**
(45) Veröffentlichungstag und Bekanntmachung des Hinweises auf die Patenterteilung: **19.11.2008**
(21) Anmeldenummer: 05023152.1
(22) Anmeldetag: 24.10.2005
(51) Int. Cl.: B60J 1/20, B60R 5/04

(54) **Stufenfreie Rolloanordnung**
Egally winded roller blind
Store enroulé également

(30) Priorität: 28.10.2004 DE 102004052479
(43) Veröffentlichungstag der Anmeldung: 03.05.2006
(73) Patentinhaber: BOS GmbH & Co. KG, 73760 Ostfildern (DE)
(72) Erfinder: Schneider, Roland, 89075 Ulm (DE)
(74) Vertreter: Rüger, Barthelt & Abel Patentanwälte

(56) Entgegenhaltungen:
- DE-A1- 3 941 877
- DE-B3- 10 305 750
- DE-U1- 29 812 776
- US-A- 3 430 677

## Beschreibung

Es ist bekannt zum Abdecken von Laderäumen von Kombi-Pkw und dergleichen rolloartige Anordnungen zu verwenden. Zu diesen Anordnungen gehört eine im Fahrzeug bezüglich einer Horizontalachse drehbar gelagerte Wickelwelle, an der mit einer Kante eine Rollobahn befestigt ist. Die Rollobahn besteht aus einem undurchsichtigen Folienmaterial und erstreckt sich im Gebrauchszustand von der Rückseite der Rücksitzlehne bis zu der Hinterkante der Ladebucht im Kraftfahrzeug.

Im ausgezogenen Zustand ist die Rollobahn nahezu vollständig von der Wickelwelle abgewickelt. In der Praxis bedeutet dies, dass höchstens noch eine Windung Rollobahn aus Sicherheitsgründen auf der Wickelwelle verbleibt, um dort die stoffschlüssige Verbindung zwischen Rollobahn und Wickelwelle gegen Abschälen zu schützen.

Obwohl die Rollobahn, die hier verwendet wird, verhältnismäßig dünn ist, hat sich gezeigt, dass die scharfe Schnittkante der Rollobahn, die parallel zur Wickelwelle verläuft und auch im ausgefahrenen Zustand auf der Wickelwelle verbleibt, sich allmählich durch die aufgewickelten Lagen hindurch abprägt. Auf der ausgefahrenen Rollobahn sind entsprechend dem Wickeldurchmesser ein oder zwei derartige Abdruckbilder der Rollobahnkante zu erkennen. Diese Abdruckbilder erstrecken sich über die gesamte Breite der Rollobahn und hinterlassen einen unschönen Eindruck.

Grundsätzliche ähnliche Verhältnisse entstehen auch bei Fenster- oder Scheibenrollos von Kraftfahrzeugen, wie sie bspw. in der DE 100 57 762 A1 beschrieben sind. Bei Fensterrollos dieser Art wird eine dünne gelochte Folie oder ein Gewirke verwendet, das mit einem Kantenstreifen stoffschlüssig mit der Wickelwelle verbunden ist. Es hat sich gezeigt, dass sich hier langfristig die Schnittkante der Rollobahn auch durch eine eventuelle Schutzwindung hindurch bis auf solche Windungen abbildet, die bei ausgefahrenen Fensterrollo in Sichtbereich liegen.

Um sichtbare Knicke in der Rollobahn zu verhindern, ist es aus der DE 298 12 776 U1 bekannt, die Wickelwelle mit einer parallel zur Mantellinie verlaufenden Stufe zu versehen, in die die Rollobahn mit der Kante eingelegt wird. Zwischen der Wickelwelle und der Rollobahn liegt zusätzlich noch ein Streifen, der in eine Nut in der Wickelwelle eingreift.

Die DE 39 41 877 A1 zeigt ebenfalls eine gattungsgemäße Rollobahn.

Ausgehend hiervon ist es Aufgabe der Erfindung eine Rolloanordnung zu schaffen, bei der sich die Kante, mit der die Rollobahn an der Wickelwelle beginnt, nicht mehr sichtbar auf die darüber liegenden Windungen der aufgewickelten Rollobahn abprägen, ohne dass ein spiralförmiger Querschnitt der Wickelwelle erforderlich ist.

Diese Aufgabe wird erfindungsgemäß durch eine Rolloanordnung mit den Merkmalen des Anspruches 1 gelöst.

Das Abprägen der steilen scharfkantigen Schnittkante geschieht infolge des Umstands, dass sich an der Schnittkante der Radius sprunghaft ändert und die Rollobahn straff über diese Kante gespannt wird, wenn sie auf der Wickelwelle aufgewickelt wird.

Lösungsgemäß wird der Sprung, der durch die Schnittkante der Rollobahn entsteht, durch eine Rampenfläche abgemildert. Sie sorgt dafür, dass die Außenfläche der Rollobahn, die beim Wickel außen liegt, nicht mehr sprunghaft, sondern kontinuierlich in die Außenfläche der Wickelwelle übergeht. Dadurch bleibt zwar der Radiusunterschied bestehen, allerdings nicht mehr mit einem steilen Sprung. Durch die Rampenfläche wird diese sprunghafte Änderung vermieden und folglich auch das Abprägen und ein Sichtbarwerdens der Druckstelle auf dem darüber befindlichen Lagen des Wickels, mit der Folge des sonst unschönen Aussehens der abgewickelten Rollobahn.

Die Rampenfläche kann erzeugt werden, indem nach dem Aufkleben oder Befestigen der Rollobahn an der Wickelwelle die ursprüngliche gerade Schnittkante, vorzugsweise mit einem Schleifband, abgeschliffen wird. Hierdurch wird der Sprung eliminiert und durch eine Schrägfläche ersetzt, wodurch sich der Radiusunterschied auf einen entsprechenden Umfangswinkel verteilt, was das unerwünschte Abprägen auf die darüber befindlichen, d.h. radial weiter außen, liegenden Lagen vermeidet.

Eine weitere Möglichkeit die Rampenfläche zu erzeugen besteht in der Verwendung eines Füllstücks, das in der Innenecke zwischen der Schnittkante der Rollobahn und der Außenumfangsfläche der Wickelwelle angeordnet ist. Dieses Füllstück kann ein vorgeformtes Teil sein. Eine solche Lösung bietet sich vor allen Dingen auch dann an, wenn der Sprung verhältnismäßig hoch ist, beispielweise wenn die Rollobahn an der Wickelwelle nicht festgeklebt, sondern über eine Kedernut-Kederschlaufe-Verbindung an der Wickelwelle befestigt ist. Durch die Kedernut entsteht ein verhältnismäßig weiter, offener Spalt, der ebenfalls dazu neigt, sich auf die darüber befindlichen Lagen durch zu prägen. Außerdem ist wegen der Schlauchbildung eine Materialverstärkung vorhanden, die den Radiusunterschied zusätzlich vergrößert.

Das Füllstück kann lose auf der Wickelwelle aufliegen, oder mit der Wickelwelle stoffschlüssig verbunden sein.

Das Füllstück kann auch auf der Wickelwelle selbst erzeugt werden, was den Vorteil hat, das Fertigungstoleranzen weitgehend ausgeschlossen sind.

Die Abmessungen des Füllstücks passen sich automatisch den entsprechenden Verhältnissen an, wenn beispielsweise das Füllstück als formbare Masse aufgegeben wird, die sich anschließend entsprechend verfestigt.

Das Füllstück kann aus sich verfestigendem Materialien bestehen, wie Heißklebern, Zweikomponentenklebern, aushärtbaren Harzen, z.B. Acrylharzen, und anderen Materialien mit den entsprechenden Eigenschaften, nämlich einer plastischen Verformbarkeit zu Beginn und einer hinreichenden Festigkeit sowie thermischen Stabilität nach dem Verfestigen und dem Aufbringen der Rollobahn.

Die Maßnahme zum Vermeiden eines abprägenden Sprungs oder sich abprägenden Schnittkante an der darüber liegenden Lagen der Rollobahn kann bei einer zylindrischen Wickelwelle bzw. einer Wickelwelle mit über die Länge gesehen konstantem Querschnitt als auch bei einer Wickelwelle verwendet werden, bei der sich der Querschnitt vom einem zum anderen Ende verändert.

Als Rollobahn kommt jedes geeignete Material in Frage, beispielsweise Folienmaterial oder auch textiles Flächengebilde in Gestalt eines Gewebes oder eines undehnbaren Gewirkes.

Wie bereits erwähnt kann die Rollobahn formschlüssig oder stoffschlüssig mit der Wickelwelle verbunden sein. Bei der formschlüssigen Verbindung kann die Rampenfläche durch ein eingelegtes Füllstück oder durch ein Füllstück erzeugt werden, dass als verformbare Masse aufgetragen wird.

Im übrigen sind Weiterbildungen der Erfindung Gegenstand von Unteransprüchen.

Beim Durchlesen der nachfolgenden Figurenbeschreibung wird auch klar, dass eine Reihe von Kombinationen der einzelnen Maßnahmen möglich sind. Alle diese Kombinationen ausdrücklich zu erwähnen würde den Umfang der Beschreibung unnötig erweitern.

In der Zeichnung sind Ausführungsbeispiele des Gegenstandes der Erfindung dargestellt. Es zeigen:
- Fig. 1: eine schematisch perspektivische Darstellung eines aufgebrochenen Fondbereiches eines Kraftfahrzeuges, mit Blick gegen die Heckscheibe;
- Fig. 2: eine schematische Darstellung des Heckscheibenrollos aus der Darstellung nach Fig. 1;
- Fig. 3: die Darstellung einer aufgebrochenen Heckpartie eines Kombi-Pkw ,unter Veranschaulichung eines Laderaumrollos;
- Fig. 4: eine schematische perspektivische Darstellung der Verbindung zwischen der Wickelwelle und der Rollobahn bei den Rolloanordnungen nach Fig. 2 und Fig. 3 unter Veranschaulichung der Erzeugung des Füllstücks;
- Fig. 5: ein weiteres Ausführungsbeispiels zur Erzeugung des Füllstücks, um den Sprung an der Schnittkante der Rollobahn zu vermeiden, in einer vereinfachten perspektivischen Darstellung;
- Fig. 6: ein drittes Ausführungsbeispiel zur Vermeidung des Sprungs durch Abschleifen der Schnittkante, in einer vereinfachten perspektivischen Darstellung; und
- Fig. 7: ein weiteres, erfindungsgemäßes Ausführungsbeispiel zu Vermeidung eines Sprungs bei formschlüssiger Verbindung zwischen der Wickelwelle und der Rollobahn, in einer vereinfachten perspektivischen Darstellung.

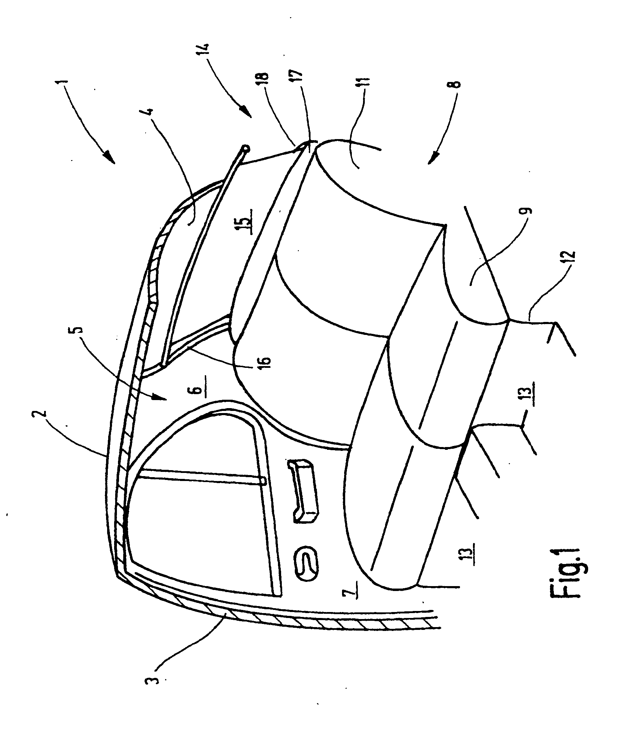

Fig. 1 stellt den aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule 5 trägt eine Innenverkleidung 6.

Zwischen der B-Säule 3 und der C-Säule 5 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Vor der Innenseite des Heckfensters 4 befindet sich ein Heckscheibenrollo 14. Von dem Heckscheibenrollo 14 ist dessen teilweise ausgezogene Rollobahn 15 sowie eine der seitlichen Führungsschienen 16 zu erkennen. Die Führungsschiene 16 beginnt an einer hinter der Rücksitzlehne 11 vorhandenen Hutablage 17 und verläuft neben der seitlichen Fensterkante. Außerdem enthält die Hutablage 17 einen durchgehendenden Auszugsschlitz 18, aus dem die Rollobahn 15 herausläuft. Der Auszugsschlitz 18 ist gekrümmt, um sich der Krümmung des Heckfensters 4 anzunähern.

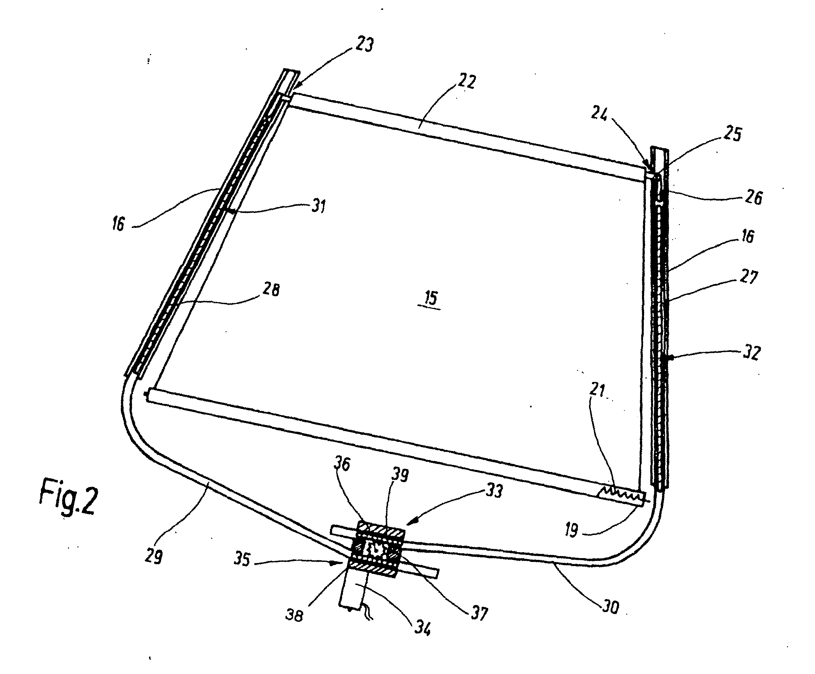

Der prinzipelle Aufbau des Heckscheibenrollos 14 ergibt sich aus Fig. 2.

Unterhalb der Hutablage 17 ist, wie sich aus Fig. 2 ergibt, eine gekrümmmte Wickelwelle 19 drehbar gelagert, an der längs einer Kante die Rollobahn 15 befestigt ist. Die Wickelwelle 19 ist mit Hilfe eines schematisch angedeuteten Federmotors 21 im Sinne des Aufwickelns der Rollobahn 15 auf die Wickelwelle 19 vorgespannt. Hierzu ist eine Schraubenfeder vorgesehen, die einends karosseriefest verankert und andernends in der Wickelwelle 19 festgelegt ist.

Die Rollobahn 15 weist einen etwa trapezförmigen Zuschnitt auf und ist an ihrer von der Wickelwelle 19 abliegenden Kante mit einer schlauchförmigen Schlaufe 22 versehen. Durch die schlauchförmige Schlaufe 22 führt ein Auszugsprofil oder Spriegel, in dem Führungsstücke 23 und 24 teleskopartig gelagert sind. Die Führungsstücke 23 und 24 weisen einen Halsteil 25 auf, der einen kleineren Durchmesser aufweist als ein sich daran anschließendes Führungsglied 26, das die Gestalt eines kurzen zylinderförmigen Abschnitts aufweist. Die Führungsstücke 26 laufen in den Führungsschienen 16, die neben den beiden Seitenkanten des Heckfensters 4 angeordnet sind.

Jede der Führungsschienen 16 enthält eine Führungsnut 27, die sich in Richtung auf die Rollobahn 15 in einem Führungsschlitz 28 öffnet.

Das untere Ende jeder Führungsschiene 16 ist mit einem Führungsrohr 29, 30 verbunden, in denen knicksteif zwei biegsame Schubglieder 31 und 32 geführt sind. Die biegsamen Schubglieder 31 und 32 sind sogenannte Suflexwellen. Sie bestehen aus einem zylinderförmigen Kern, der von einer schraubenförmig verlaufenden Rippe umgeben ist. Auf diese Weise wird eine Art flexibler Zahnstangen mit Rundumverzahnung erhalten.

Die Führungsrohre 29 und 30 verbinden die Führungsschienen 16 mit einem Getriebemotor 33. Der Getriebemotor 33 setzt sich aus einem permanent erregten Gleichstrommotor 34 und einem Getriebe 35 zusammen auf dessen Ausgangswelle 36 ein Stirnzahnrad 37 drehfest sitzt. Das Zahnrad 37 kämmt mit den beiden Schubgliedern 31 und 32 formschlüssig. Diese Schubglieder 31 und 32 laufen tangential an die an diametral gegenüberliegenden Seiten an dem Stirnzahnrad 37 vorbei und sind hierzu in entsprechenden Bohrungen 38 und 39 geführt.

Durch Ingangsetzen des Getriebemotors 33 werden die Schubglieder 31, 32 wahlweise vorgeschoben oder zurückgezogen. Der Bewegung der Schubglieder 31, 32 folgen die Führungsstücke 23 und 24. Diese werden mit Hilfe des Federmotors 21 gegen die freien Enden der Schubglieder 31, 32 anliegend gehalten, die sich in den Führungsnuten 27 befinden.

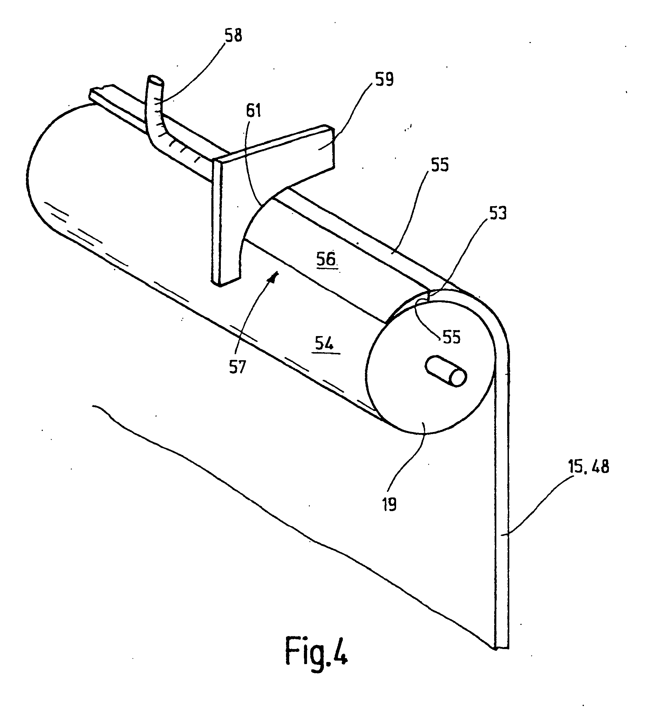

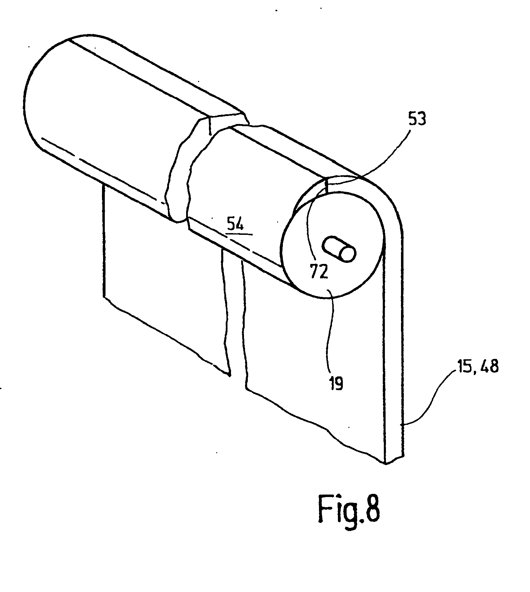

Die Befestigung der Rollobahn 15 an der Wickelwelle 19 ist unten an Hand der Figuren 4 bis 8 erläutert.

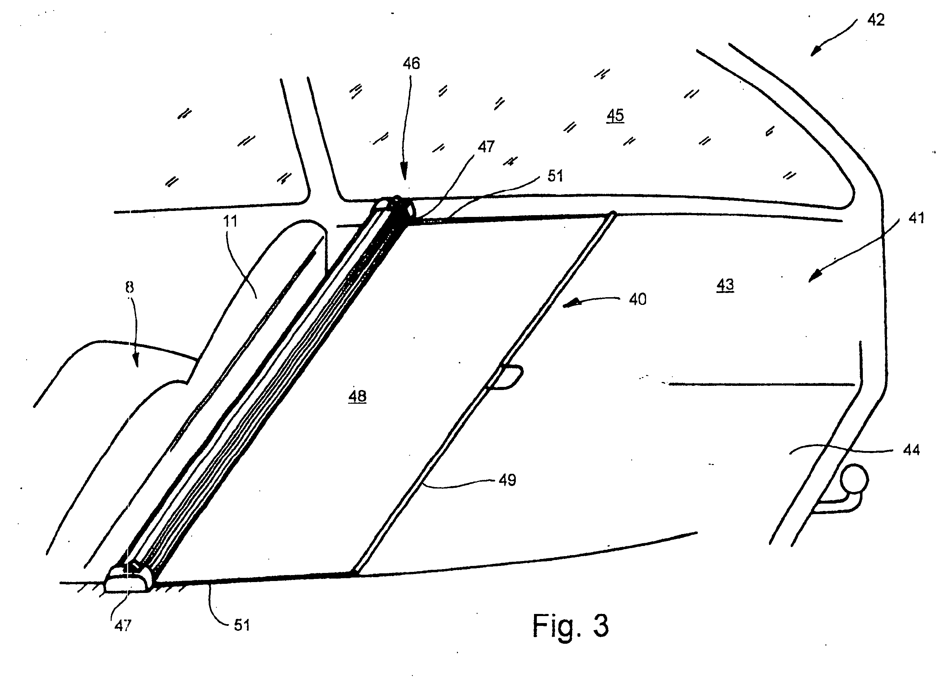

Fig. 3 zeigt eine weitere Rolloanordnung bei einem Kraftfahrzeug, uns zwar in Gestalt eines Abdeckrollos 40 für eine Ladebucht 41 eines Kombi-PKW 42.

Die Ladebucht 41 wird von einer Seitenwand 43, zu der eine zweite Seitenwand spiegelbildlich ist, sowie einem Boden 44 begrenzt. Oberhalb der Seitenwand 43 ist ein Seitenfenster 45 zu erkennen. Den Abschluss nach vorne bildet die Rücksitzlehne 11 der Rücksitzbank 8.

Zu dem Abdeckrollo 40 gehört eine herausnehmbare längliche Kassette 46, die in seitlichen Taschen 47 der Fahrzeugkarosserie unterhalb der Seitenfenster 45 aufgenommen ist. In der länglichen Kassette 46 ist drehbar eine Wickelwelle gelagert, an der mit einer Kante die Rollobahn 48 befestigt ist.

Auch hierbei ist wiederum die nicht erkennbare Wickelwelle mittels eines Federmotors in Aufwickelrichtung der Rollobahn 48 vorgespannt.

Das freie Ende der Rollbahn 48 ist mit einem Zugstab 49 verbunden, der in seitlichen Führungsschienen 51 unterhalb der Seitenfenster 45 geführt ist.

Die Verbindung zwischen der Rollobahn 15 bzw. der Rollobahn 48 mit der Wickelwelle 19 ist im Einzelnen in Fig. 4 veranschaulicht. Hierbei ist aus Darstellungsgründen die Dicke der jeweiligen Rollobahn 15 im Verhältnis zum Durchmesser der Wickelwelle 19 übertrieben gezeigt, um das Wesentliche besser erkennen zu können.

Wie in Fig. 4 zu erkennen ist, endet die Rollobahn 15 an einer rechtwinkligen Schnittkante 53, die auf der zylindrischen Außenumfangsfläche 54 eine Stufe entstehen lässt. Die Schnittkante 53 bildet zusammen mit der zylindrischen Außenumfangsfläche 54 eine Innenecke 55.

Ohne besondere Maßnahmen prägt sich dieser Sprung, hervorgerufen durch die Schnittkante 53, auf die darüber befindlichen Lagen der Rollobahn 15 ab, wenn sie spiralförmig auf die Wickelwelle 19 aufgewickelt ist. An dem Durchmesserunterschied, der durch die Schnittkante 53 hervorgerufen wird, entsteht in der Rollobahn 15 ein verhältnismäßig scharfer Knick, der sich im Laufe der Zeit stabilisiert und zu einer bleibenden Verformung in der Rollobahn 15 wird. Im ausgefahrenen Zustand erzeugt diese Verformung einen über die Breite der Rollobahn 15 durchlaufenden unschönen Streifen zufolge der geänderten Lichtreflexion, weil sich dort die Flächenneigung der Rollobahn 15 gegenüber dem einfallenden Licht ändert.

Ohne besondere Gegenmaßnahmen würde diese unschöne Verformung erst bei der dritten oder vierten Lage des Wickels nicht mehr auftreten.

Damit die Verformung, die durch Schnittkante 53 hervorgerufen wird, vermieden wird, ist erfindungsgemäß eine Rampenfläche 56 vorgesehen. Die Rampenfläche 56 sorgt dafür, dass die Außenfläche der Rollobahn 15, die in Fig. 4 mit 57 bezeichnet ist, sich sprungfrei über die Rampenfläche 56 fortsetzt. Die Rampenfläche 56 selber mündet ohne scharfen Knick weitgehend tangential in die Außenumfangsfläche 54 ein.

Die Rampenfläche 56 ist bei dem in Fig. 4 gezeigten Ausführungsbeispiel Bestandteil eines Füllstücks 57. Dieses Füllstück 57 liegt, wie gezeigt, in der Innenecke 55. Im Querschnitt gesehen hat das Füllstück 57 etwa die Gestalt eines gekrümmten Dreiecks, dessen eine Kante eine Kante ist, die parallel zu der Schnittkante 53 liegt, dessen andere Kante auf der Außenumfangsfläche 54 aufliegt und deren dritte Kante die Rampenfläche 56 ist.

Mit Hilfe der Rampenfläche 56, die über die gesamte Länge der Wickelwelle 15 durchläuft, wird der ursprünglich sprunghafte Wechsel im Radius auf die Strecke verlängert, die die Rampenfläche 56 in Umfangsrichtung ausmacht.

Das Füllstück 57 mit der Rampenfläche 56 kann beispielsweise wie in Fig. 4 weiterhin schematisch angedeutet, erzeugt werden. Hierzu wird zunächst die Rollobahn 15 mit einem nicht weiter erkennbaren zweiseitigen Klebeband längs der Schnittkante 53 auf der Außenumfangsfläche 54 festgeklebt. Dabei verläuft die Schnittkante 53 im Wesentlichen längs der Mantellinie der Außenumfangsfläche 54. Die stoffschlüssige Verbindung mittels des Klebebandes zwischen der Wickelwelle 19 und der Rollobahn 15 erstreckt sich beispielsweise über ein Viertel des Umfangs der Wickelwelle 19. In die so erhaltene Innenecke 55 wird von dem sichtbaren Stirnende der Wickelwelle 19 her kommend ein Strang 58, beispielsweise aus einem Acrylharz, einem Heißkleber oder einem Zweikomponentenkleber, aufgegeben. Der zunächst etwa zylindrische Strang 58 wird mittels einer Rakel 59 zu dem gewünschten Füllkörper 57 umgeformt. Die Rakel 59 weist hierzu eine entsprechend geformte Kante 61 auf, die den Verlauf der Rampenfläche 56 in Umfangsrichtung der Wickelwelle 19 aufweist. Die Rakel 59 wird, wie schematisch angedeutet, über den gesamten Strang 58 geführt, d.h. von einem Ende der Wickelwelle 19 bis zum anderen Ende. Nach dem Aufbringen des zunächst plastisch verformbaren Materials lässt man dieses sich verfestigen, womit gewünschte Füllkörper 57 entsteht, der stoffschlüssig auf der Außenumfangsfläche 54 haftet.

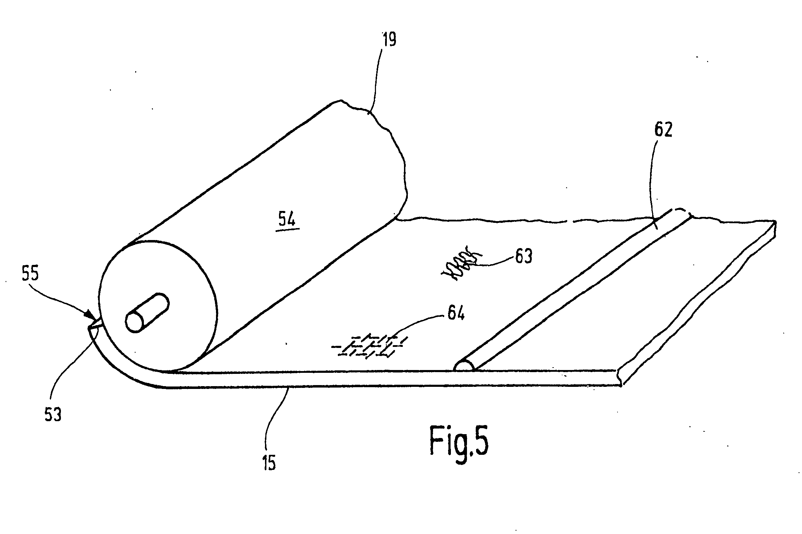

Fig. 5 zeigt eine weitere Möglichkeit zur Erzeugung des Füllkörpers 57. Wie zuvor ist zunächst die Rollobahn 15 über ein entsprechendes Stück an der Außenumfangsfläche 54 der Wickelwelle 19 aufgeklebt. Entsteht wiederum die Innenecke 55, die von der Schnittkante 53 sowie der Außenumfangsfläche 54 begrenzt ist.

In einem Abstand gemessen ab der Schnittkante 53, der einer Windung der Rollobahn 15 auf der Wickelwelle 19 entspricht, wird ein gerader Strang 62 über die gesamte Breite der Rollobahn 15 aufgegeben. Der Strang 63 besteht aus demselben Material wie der Strang 58. Er ist volumenmäßig so bemessen, dass er dem Volumen des fertigen Füllköpers 57 entspricht.

Unmittelbar nach dem Aufgeben wird der Strang 62 im Querschnitt etwa halbkreisförmig sein, weil er bis zu einem gewissen Grad auf der betreffenden Seite, nämlich der in der Außenumfangsfläche 54 zugekehrten Seite der Rollobahn 15, 48 in die Breite fließen wird. Sodann wird die Rollobahn 15, 48 auf die Wickelwelle 19 aufgewickelt, wobei sich nunmehr der noch plastische Strang 62 in die Innenecke 54 drängt und dabei einen Füllkörper 57 entstehen lässt, der etwa die Form des Füllkörpers 57 nach Fig. 4 hat. Nach dem Aushärten bzw. Festwerden ist die Rollobahn im Bereich des ursprünglichen Strangs 62 und damit der Innenecke 55 zusätzlich der Außenumfangsfläche 54 der Wickelwelle 19 stoffschlüssig verbunden.

Wie Fig. 5 weiter zeigt, kann als Material für die Rollobahn 15 eine Folie, ein Gewirke, wie bei 63 gezeigt, oder ein Gewebe, wie bei 64 veranschaulicht, verwendet werden. In allen Fällen kommt der Füllkörper 57 zum Einsatz um die Wirkung der geraden steilen Schnittkante 53 auf die nachfolgenden Windungen zu vermeiden.

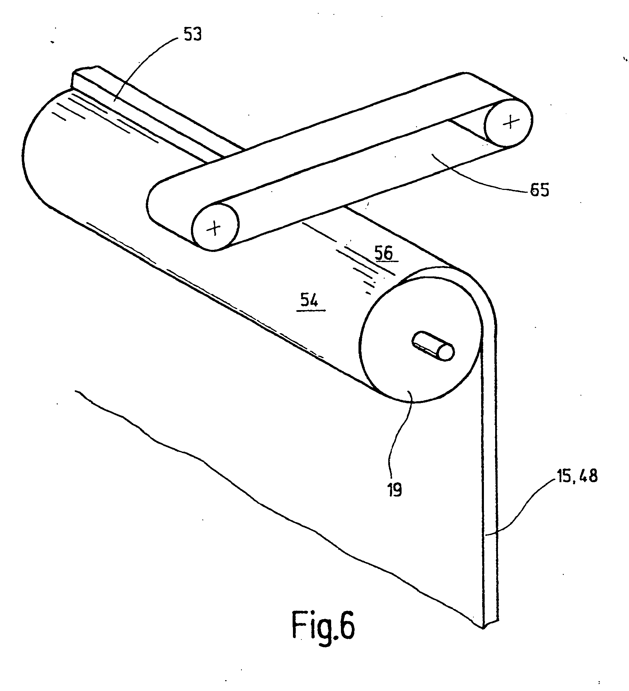

Fig. 6 zeigt eine abgewandelte Ausführungsform, bei der die Rampenfläche 56 nicht durch eine Fläche eines Füllkörpers oder Füllstücks 57 erzeugt wird.

Wie zuvor beschrieben, wird die Rollobahn 15 mit einem beidseitigen Klebeband oder mit einem Heißkleber auf der Außenumfangsfläche 54 der Wickelwelle 19 stoffschlüssig befestigt. Es entsteht zunächst über die Länge der Wickelwelle 19 die bereits mehrfach erwähnte Schnittkante 53, die parallel zu den Radius verläuft.

Nachdem die Rollobahn 15 an der Wickelwelle 19 befestigt ist, wird die Schnittkante 53, beispielsweise mit Hilfe eines Schleifbandes 65 abgeschliffen. Durch das Abschleifen verschwindet der Sprung durch die Schnittkante 53. Statt dessen ist durch das Abschleifen die Rollobahn 15, 48 spitz zulaufend gestaltet, so dass ihrer Außenseite unmittelbar tangential und damit ohne Sprung in die Außenumfangsfläche 54 einläuft.

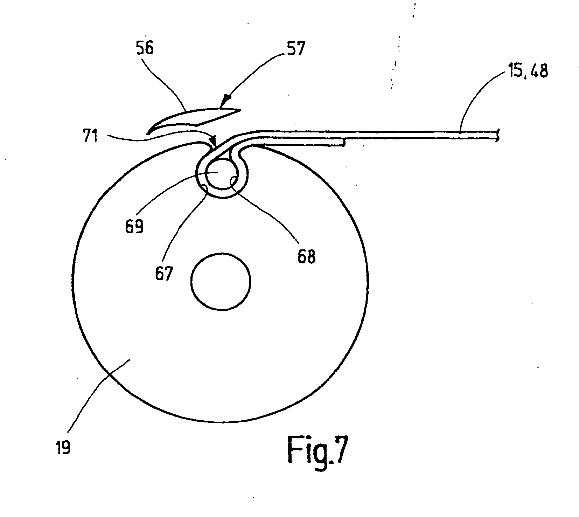

Die Verwendung des Füllstücks 57 ist, wie Fig. 7 zeigt, keineswegs auf die stoffschlüssige Verbindung zwischen der Rollobahn 15 und der Wickelwelle 19 beschränkt.

Während bei den zuvor erörterten Ausführungsbeispielen die Außenumfangsfläche 54, je nach Anwendungsfall, zylindrisch glatt oder konisch glatt aufgeführt ist, enthält die Wickelwelle 19 nach Fig. 7 eine über die Länge durchlaufende Kedernut 67. Die Rollobahn 15 bzw. 48 ist an der betreffenden Kante mit einer Kederschlaufe 68 versehen, in der ein Füllstab 69 steckt. Der so gebildete Keder sitzt in der Kedernut 67 und die Rollobahn 15 bzw. 48 führt aus der Kedernut 67 heraus.

Wegen der Schlaufenbildung ist das Material in unmittelbarer Nachbarschaft der Kedernut 67 in Richtung auf den Verlauf der Windung beim Aufwickeln der Rollobahn 15 bzw. 48 doppellagig. Es entsteht, wie die Figur erkennen lässt, eine mehr oder weniger breiter und tiefer Spalt 71 der einerseits von dem Rand der Kedernut 67 und andererseits von der Außenseite der Rollobahn 15 bzw. 48 begrenzt ist. Es hat sich gezeigt, dass sich auch dieser Spalt in unschöner Weise auf den nachfolgenden Windungen der Rollobahn 15 bzw. 48 abformt, wenn diese auf der Wickelwelle 19 aufgewickelt ist.

Um Abprägen zu vermeiden ist wiederum ein Füllstück 57 vorgesehen, dass beispielsweise vorgefertigt ist, in den Spalt 71 eingelegt wird. Das Füllstück 57 bildet, die bereits erwähnte Rampenfläche 56 die den allmählichen Durchmesserübergang erzeugt, um den Sprung und damit das knickhafte Verformen der Rollobahn 15 bzw. 48 bei jedem Übergang über den Spalt zu vermeiden.

Es bedarf keiner bildlichen Darstellung, dass sämtliche erläuterte Maßnahmen zur Vermeidung des Sprungs an der Schnittkante, zumindest ursprünglich, rechtwinkligen Schnittkanten der Rollobahn keineswegs auf Fensterrollos oder Abdeckrollos von Laderäumen beschränkt sind. Sie können bei jeder Art von Rollos im Kraftfahrzeug Einsatz finden. Außerdem sind die gezeigten Maßnahmen nicht notwendigerweise auf zylindrische Wickelwellen beschränkt. Sie sind in gleicher Weise auf bei Wickelwellen anwendbar, die von Haus aus konisch sind bzw. sie können auch zum Einsatz kommen bei solchen Wickelwellen, bei denen der Konus erzeugt wird, indem auf einer ursprünglichen zylindrischen Wickelwelle ein dreieckförmiges Ausgleichsstück aufgewickelt wird, um eine konische Wickelwelle anzunähern. Auch hier entsteht eine Sprungstelle, die beispielsweise gemäß Fig. 4 abgemildert werden kann.

Eine Rollobahn, die an einer Wickelwelle befestigt wird, erzeugt mit der Schnittkante eine Sprungstelle im Wickeldurchmesser. Hier ändert sich der Krümmungsradius des Wickels abrupt. Im Laufe der Zeit stabilisiert sich der dadurch hervorgerufene Knick in der Rollobahn am ausgeprägtesten bei den inneren Lagen des Wickels. Bei ausgefahrener Rollobahn ist der Knick als Streifen sichtbar.

Um den Knick zu vermeiden geht die Außenfläche der Rollobahn an der Befestigungsstelle in einer Rampenfläche in die Wickelwelle über.

## Patentansprüche

1. Rolloanordnung (14,40) für Kraftfahrzeuge, wie Fenster- oder Laderaumrollos,
mit einer Wickelwelle (19), die eine im Wesentlichen rotationssymmetrische Außenumfangsfläche (54) aufweist,
mit einer Rollobahn (15,48), die längs einer Kante (53) an der Wickelwelle (19) befestigt ist und die eine der Wickelwelle (19) zugekehrte Innenfläche und eine von der Wickelwelle (19) weg zeigende Außenfläche aufweist,
mit einer Rampenfläche (56), die über die Länge der Wickelwelle (19) durchläuft **dadurch gekennzeichnet, dass** die Rampenfläche von der Außenumfangsfläche (54) der Wickelwelle (19) zu der Außenfläche der Rollobahn (15,48) führt, wobei die Rampenfläche (56) von der Achse der Wickelwelle (19) weg zeigt und nicht parallel zu einem durch die Rampenfläche (56) laufenden Radius der Wickelwelle (19) ausgerichtet ist.

2. Rolloanordnung nach Anspruch 1, **dadurch gekennzeichnet, dass** die Rampenfläche (56) von einer Schleiffläche der Rollobahn (15,48) gebildet ist.

3. Rolloanordnung nach Anspruch 1, **dadurch gekennzeichnet, dass** die Rampenfläche (56) eine von der Achse der Wickelwelle (19) weg zeigende Fläche eines über die Länge der Wickelwelle (19) durchlaufenden Füllstücks (57) ist.

4. Rolloanordnung nach Anspruch 3, **dadurch gekennzeichnet, dass** das Füllstück (57) ein vorgeformtes Teil ist.

5. Rolloanordnung nach Anspruch 3, **dadurch gekennzeichnet, dass** das Füllstück (57) ein auf der Wickelwelle (19) erzeugtes Teil ist, das mit der Wickelwelle (19) stoffschlüssig verbunden ist.

6. Rolloanordnung nach Anspruch 3, **dadurch gekennzeichnet, dass** das Füllstück (57) sowohl mit der Wickelwelle (19) als auch mit der Rollobahn (15,48) stoffschlüssig verbunden ist.

7. Rolloanordnung nach Anspruch 3, **dadurch gekennzeichnet, dass** das Füllstück (57) aus einem verfestigbaren Material wie Heißklebermaterial, Zweikomponenten-Kleber, einem verfestigbaren Harz, wie Acrylharz oder dergleichen besteht.

8. Rolloanordnung nach Anspruch 1, **dadurch gekennzeichnet, dass** sich die Querschnittsabmessungen der Wickelwelle (19) von einem Ende zu dem anderen Ende kontinuierlich ändern, oder von einem Ende bis zu dem anderen Ende konstant sind.

9. Rolloanordnung nach Anspruch 1, **dadurch gekennzeichnet, dass** die Wickelwelle (19) aus Metall oder Kunststoff besteht.

10. Rolloanordnung nach Anspruch 1, **dadurch gekennzeichnet, dass** die Rollobahn (15,48) aus einer Folie besteht.

11. Rolloanordnung nach Anspruch 1, **dadurch gekennzeichnet, dass** die Rollobahn (15,48) aus einem textilen Flächengebilde (63,64) besteht in Gestalt eines Gewebes oder eines undehnbaren Gewirkes.

12. Rolloanordnung nach Anspruch 1, **dadurch gekennzeichnet, dass** die Rollobahn (15,48) mit der Wickelwelle (19) stoffschlüssig verbunden ist.

13. Rolloanordnung nach Anspruch 1, **dadurch gekennzeichnet, dass** die Rollobahn (15,48) mit der Wickelwelle (19) formschlüssig verbunden ist.

14. Rolloanordnung nach Anspruch 13, **dadurch gekennzeichnet, dass** die Wickelwelle (19) eine Kedernut (67) enthält, in der eine Kederschlaufe (68) der Rollobahn (15,48) verankert ist.

## Claims

1. Roller blind arrangement (14, 40) for motor vehicles such as window or luggage area roller blinds,
with a winding shaft (19), which has a substantially rotationally symmetric outer peripheral face (54),
with a blind sheet (15, 48), which is fastened to the winding shaft (19) along one edge (53) and which has an inside face facing the winding shaft (19) and an outside face directed away from the winding shaft (19),
with a sloping face (56), which runs continuously over the length of the winding shaft (19),
**characterised in that** the sloping face runs from the outer peripheral face (54) of the winding shaft (19) to the outer face of the blind sheet (15, 48), wherein the sloping face (56) is directed away from the axis of the winding shaft (19) and is not oriented parallel to a radius of the winding shaft (19) running through the sloping face (56).

2. Roller blind arrangement according to claim 1, **characterised in that** the sloping face (56) is formed by a ground surface of the blind sheet (15, 48).

3. Roller blind arrangement according to claim 1, **characterised in that** the sloping face (56) is a surface, which is directed away from the axis of the winding shaft (19), of a filler piece (57) running continuously over the length of the winding shaft (19).

4. Roller blind arrangement according to claim 3, **characterised in that** the filler piece (57) is a preformed part.

5. Roller blind arrangement according to claim 3, **characterised in that** the filler piece (57) is a part formed on the winding shaft (19) and integrally connected to the winding shaft (19).

6. Roller blind arrangement according to claim 3, **characterised in that** the filler piece (57) is integrally connected both to the winding shaft (19) and to the blind sheet (15, 48).

7. Roller blind arrangement according to claim 3, **characterised in that** the filler piece (57) is made from a hardenable material such as hot-melt adhesive material, two-component adhesive, a hardenable resin such as acrylic resin or the like.

8. Roller blind arrangement according to claim 1, **characterised in that** the cross-sectional dimensions of the winding shaft (19) change continuously from one end to the other end or are constant from one end to the other end.

9. Roller blind arrangement according to claim 1, **characterised in that** the winding shaft (19) is made of metal or plastic.

10. Roller blind arrangement according to claim 1, **characterised in that** the blind sheet (15, 48) is made of a foil.

11. Roller blind arrangement according to claim 1, **characterised in that** the blind sheet (15, 48) is made of a textile fabric (63, 64) in the form of a woven fabric or a non-stretchable knitting fabric.

12. Roller blind arrangement according to claim 1, **characterised in that** the blind sheet (15, 48) is integrally connected to the winding shaft (19).

13. Roller blind arrangement according to claim 1, **characterised in that** the blind sheet (15, 48) is positively connected to the winding shaft (19).

14. Roller blind arrangement according to claim 13, **characterised in that** the winding shaft (19) contains an edging groove (67), in which an edging loop (68) of the blind sheet (15, 48) is anchored.

## Revendications

1. Store (14, 40) pour des véhicules automobiles, tels que des stores de fenêtre ou de compartiment à bagages, qui comprend :
- un arbre d'enroulement (19) dont la surface externe est essentiellement de révolution,
- une bande de store (15, 18) qui est fixée le long d'un bord (53) à l'arbre d'enroulement (19) et dont la face interne est en regard de cet arbre tandis que sa face externe leur tourne le dos,
- une rampe (56) qui s'étend sur toute la longueur de l'arbre d'enroulement (19),
ce store étant **caractérisé en ce que** la rampe (56) va de la surface externe (54) de l'arbre d'enroulement (19) à la surface externe de la bande de store (15, 48), en s'éloignant de l'axe de l'arbre d'enroulement (19) sans être dirigé parallèlement à un rayon de cet arbre (19) passant par la rampe.

2. Store selon la revendication 1, **caractérisé en ce que** la rampe (58) est constituée par une surface rectifiée de la bande de store (15, 48).

3. Store selon la revendication 1, **caractérisé en ce que** la rampe (58) est constituée par la surface regardant à l'opposé de l'axe de l'arbre d'enroulement (19), d'une pièce de remplissage (57) qui s'étend sur toute la longueur de cet arbre.

4. Store selon la revendication 3, **caractérisé en ce que** la pièce de remplissage (57) est une pièce préformée.

5. Store selon la revendication 3, **caractérisé en ce que** la pièce de remplissage (57) est une pièce produite sur l'arbre d'enroulement (19) et qui est reliée par la matière à celui-ci.

6. Store selon la revendication 3, **caractérisé en ce que** la pièce de remplissage (57) est reliée par la matière à l'arbre d'enroulement (19) et aussi à la bande de store (15, 48).

7. Store selon la revendication 3, **caractérisé en ce que** la pièce de remplissage (57) est faite d'un matériau durcissable, comme un adhésif à chaud, un adhésif à deux composants, une résine durcissable, telle qu'une résine acrylique ou similaire.

8. Store selon la revendication 1, **caractérisé en ce que** les dimensions de la section de l'arbre d'enroulement (19) varient en continu d'une extrémité à l'autre, ou restent constantes d'une extrémité à l'autre.

9. Store selon la revendication 1, **caractérisé en ce que** l'arbre d'enroulement (19) est en métal ou en matière plastique.

10. Store selon la revendication 1, **caractérisé en ce que** la bande de store (15, 48) est une feuille.

11. Store selon la revendication 1, **caractérisé en ce que** la bande de store (15, 48) est un produit plat (63, 64) sous la forme d'un tissu ou d'un tricot inextensible.

12. Store selon la revendication 1, **caractérisé en ce que** la bande de store (15, 48) est reliée à l'arbre d'enroulement (19) par la matière.

13. Store selon la revendication 1, **caractérisé en ce que** la bande de store (15, 48) est reliée à l'arbre d'enroulement par combinaison de formes.

14. Store selon la revendication 13, **caractérisé en ce que** l'arbre d'enroulement (19) présente une rainure de couche-point (67) dans laquelle est ancrée une boucle de couche-point (68) de la bande de store (15, 48).
